# EUROPEAN PATENT APPLICATION

(11) **EP 4 675 322 A1**
(43) Date of publication of application: **07.01.2026**
(21) Application number: 24764044.4
(22) Date of filing: 01.03.2024
(51) Int. Cl.: G02B 6/255

(54) **FUSION SPLICER**

(30) Priority: 01.03.2023 JP 2023031376
(71) Applicant: Sumitomo Electric Industries, Ltd., Osaka-shi, Osaka 541-0041 (JP)
(72) Inventor: KIMURA Akinori, Osaka-shi, Osaka 541-0041 (JP); MOURI Shintaro, Osaka-shi, Osaka 541-0041 (JP); ENDO Soichi, Osaka-shi, Osaka 541-0041 (JP)
(74) Representative: Müller-Boré & Partner Patentanwälte PartG mbB
(86) International application number: PCT/JP2024/007825
(87) International publication number: WO 2024/181567

(57) **Abstract**

A fusion splicer according to one embodiment includes an optical fiber holder that holds an optical fiber; a rotation mechanism that rotates the optical fiber holder about a central axis extending along the optical fiber; a clamp portion that is disposed on a side opposite the rotation mechanism with respect to the optical fiber holder, and that presses the optical fiber held by the optical fiber holder; a light source that is disposed above the optical fiber holder, and that irradiates a portion of the optical fiber with light, the portion being pressed by the clamp portion; and an electric power supply portion that supplies electric power to the light source. A tip of the optical fiber protrudes from the clamp portion, and at least a part of a surface of the clamp portion facing the optical fiber is a highly reflective surface.

## Description

### Technical Field

The present disclosure relates to a fusion splicer.

Priority is claimed on Japanese Patent Application No. 2023-031376, filed on March 1, 2023, the entire content of which is incorporated herein by reference.

### Background Art

Patent Literature 1 describes a fusion splicing device. The fusion splicing device includes a pair of V-groove bases on which a pair of respective optical fibers are placed; LED lamps disposed on respective sides of the pair of optical fibers; and a first television camera and a second television camera that capture images of the pair of optical fibers. The LED lamps cause light to be incident on the optical fibers from the sides of the optical fibers. The light incident on the optical fibers from the sides is emitted from end faces of the optical fibers. The first television camera and the second television camera captures images of the end faces of the optical fibers that emit the light.

Patent Literature 2 describes a splicing device for optical fibers. The splicing device splices a pair of photonic crystal fibers (PCFs). The splicing device includes two holding members that hold two respective PCFs; a first drive unit that moves each holding member; a mirror located between the two PCFs; and a camera that captures an image reflected in the mirror. In the splicing device, the PCFs are irradiated with light by epi-illumination from the camera side. The cores of the end faces of the PCFs are observed in a state where the entire end faces are illuminated by the light irradiation.

### Citation List

### Patent Literature

Patent Literature 1: PCT International Publication No. WO 2013/077002
Patent Literature 2: Japanese Unexamined Patent Publication No. 2004-53625

### Summary of Invention

### Technical Problem

A fusion splicer according to the present disclosure includes an optical fiber holder that holds an optical fiber; a rotation mechanism that rotates the optical fiber holder about a central axis extending along the optical fiber; a clamp portion that is disposed on a side opposite the rotation mechanism with respect to the optical fiber holder, and that presses the optical fiber held by the optical fiber holder; a light source that is disposed above the optical fiber holder, and that irradiates a portion of the optical fiber with light, the portion being pressed by the clamp portion; and an electric power supply portion that supplies electric power to the light source. A tip of the optical fiber protrudes from the clamp portion, and at least a part of a surface of the clamp portion facing the optical fiber is a highly reflective surface.

### Brief Description of Drawings

[FIG. 1] FIG. 1 is a view schematically showing a fusion splicer according to an embodiment.
[FIG. 2] FIG. 2 is a side view schematically showing an optical fiber holder, a rotation mechanism, and a clamp portion of the fusion splicer according to the embodiment.
[FIG. 3] FIG. 3 is a perspective view schematically showing the optical fiber holder, the rotation mechanism, and the clamp portion of the fusion splicer according to the embodiment.
[FIG. 4] FIG. 4 is a side view showing a light source and a base and a lid of the clamp portion of the fusion splicer according to the embodiment.
[FIG. 5] FIG. 5 is a side view schematically showing an optical fiber holder, a rotation mechanism, and a clamp portion of a fusion splicer according to a first modification example.
[FIG. 6] FIG. 6 is a perspective view schematically showing the optical fiber holder, the rotation mechanism, and the clamp portion of the fusion splicer according to the first modification example.
[FIG. 7] FIG. 7 is a side view schematically showing an optical fiber holder, a rotation mechanism, and a clamp portion of a fusion splicer according to a second modification example.
[FIG. 8] FIG. 8 is a perspective view schematically showing the optical fiber holder, the rotation mechanism, and the clamp portion of the fusion splicer according to the second modification example.
[FIG. 9] FIG. 9 is a side view showing a clamp portion and a non-transparent material of a fusion splicer according to a third modification example.
[FIG. 10] FIG. 10 is a front view showing the clamp portion and the non-transparent material of the fusion splicer according to the third modification example.

### Description of Embodiments

In a method in which a light source such as epi-illumination irradiates an optical fiber with light to illuminate an end face of the optical fiber, it may be difficult to accurately identify the position of a core of the optical fiber. A method in which light is incident on an optical fiber from an end face on the side opposite an end face of the optical fiber to be illuminated is known. However, in this method, particularly when the optical fiber is long, the light may not reach the end face to be illuminated. Therefore, it may not be possible to sufficiently illuminate the end face of the optical fiber.

An object of the present disclosure is to provide a fusion splicer capable of sufficiently illuminating an end face of an optical fiber.

### [Description of embodiment of present disclosure]

First, the contents of an embodiment of the present disclosure will be listed and described. (1) A fusion splicer according to one embodiment includes an optical fiber holder that holds an optical fiber; a rotation mechanism that rotates the optical fiber holder about a central axis extending along the optical fiber; a clamp portion that is disposed on a side opposite the rotation mechanism with respect to the optical fiber holder in a direction along the central axis, and that presses the optical fiber held by the optical fiber holder; a light source that is disposed above the optical fiber holder, and that irradiates a portion of the optical fiber with light, the portion being pressed by the clamp portion; and an electric power supply portion that supplies electric power to the light source. A tip of the optical fiber protrudes from the clamp portion, and at least a part of a surface of the clamp portion facing the optical fiber is a highly reflective surface.

(2) A fusion splicer according to another embodiment includes an optical fiber holder that holds an optical fiber; a rotation mechanism that rotates the optical fiber holder about a central axis extending along the optical fiber; a clamp portion that is disposed on a side opposite the rotation mechanism with respect to the optical fiber holder in a direction along the central axis, and that presses the optical fiber held by the optical fiber holder; a light source that is disposed between the optical fiber holder and the clamp portion in the direction along the central axis, and that causes light to be incident on a portion of the optical fiber that is pressed by the clamp portion; and an electric power supply portion that supplies electric power to the light source. A tip of the optical fiber protrudes from the clamp portion, and at least a part of a surface of the clamp portion facing the optical fiber is a highly reflective surface.

In the fusion splicer according to (1) or (2) above, the optical fiber holder holds the optical fiber, and the rotation mechanism rotates the optical fiber holder. The fusion splicer includes the clamp portion that presses the optical fiber, and the clamp portion is disposed on the side opposite the rotation mechanism with respect to the optical fiber holder. The fusion splicer includes the light source located above the optical fiber holder or between the optical fiber holder and the clamp portion. The light source irradiates a portion of the optical fiber with the light, the portion being pressed by the clamp portion. The tip of the optical fiber protrudes from the clamp portion. The light source irradiates a portion of the optical fiber with the light, the portion being pressed by the clamp portion, so that an end face of the optical fiber located at the tip of the optical fiber can be sufficiently illuminated. "Being sufficiently illuminated" means being illuminated to a level that allows a camera to perform image capturing. At least a part of the surface of the clamp portion facing the optical fiber is a highly reflective surface. Therefore, the light with which the optical fiber is irradiated from the light source is reflected by the highly reflective surface, and is incident on the optical fiber again. Therefore, since the light with which the optical fiber is irradiated from the light source can be confined within the optical fiber, the end face of the optical fiber can be further illuminated.

(3) In the fusion splicer according to (1) or (2) above, the clamp portion may include a base on which the optical fiber is placed, and a lid that covers the optical fiber placed on the base. At least a part of an upper surface of the base and at least a part of a lower surface of the lid may be the highly reflective surfaces. In this case, the light can be reflected into the optical fiber by the highly reflective surfaces located above and below the optical fiber. Therefore, since the light can be more reliably confined within the optical fiber, the end face of the optical fiber can be even more illuminated.

(4) In any one of (1) to (3) above, the highly reflective surface may be a polished surface. In this case, since at least a part of the surface of the clamp portion facing the optical fiber can be polished to create a polished surface, the highly reflective surface can be easily formed.

(5) In any one of (1) to (4) above, the clamp portion may include a base on which the optical fiber is placed, and a lid that covers the optical fiber placed on the base. The base may have a first surface facing away from the light source, and the lid may have a second surface facing away from the light source. The fusion splicer may further include a non-transparent material that extends from the second surface toward the first surface, and that closes a gap formed between the lid and the base. In this case, by closing the gap, which is formed between the lid and the base, with the non-transparent material, the light can be prevented from leaking from the gap to the tip of the optical fiber. Therefore, the captured image of the end face of the optical fiber can be made clearer.

(6) In any one of (1) to (5) above, the fusion splicer may further include a holder base on which the optical fiber holder is mounted. The optical fiber holder is detachable from the holder base. In this case, the fusion splicer includes the holder base, and the optical fiber holder is detachable from the holder base. Since the optical fiber holder is attachable to and detachable from the holder base, the optical fiber is easily attachable to and detachable from the rotation mechanism.

### [Details of embodiment of present disclosure]

A specific example of a fusion splicer according to an embodiment will be described. In the description of the drawings, the same or corresponding elements are denoted by the same reference signs, and duplicate descriptions will be omitted as appropriate. The drawings may be depicted in a partially simplified or exaggerated manner for ease of understanding, and dimensional ratios and the like are not limited to those shown in the drawings.

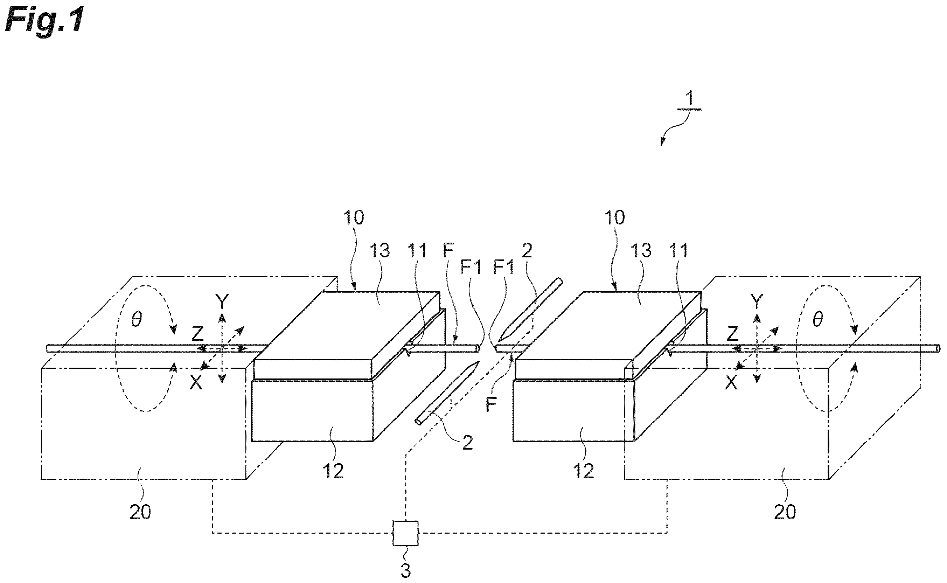

First, a configuration of the fusion splicer according to the present embodiment will be described with reference to FIG. 1. FIG. 1 is a view for describing an overview of a fusion splicer 1 according to the present embodiment. As shown in FIG. 1, the fusion splicer 1 fusion-splices a pair of optical fibers F to each other. The fusion splicer 1 includes an optical fiber holder 10 having a V-groove 11, and a rotation mechanism 20 that rotates the optical fiber holder 10. The axes of the pair of optical fibers F coincide with each other. The "axis" refers to the centerline of an optical fiber passing through the center of the optical fiber and extending along a direction in which the optical fiber extends.

The optical fiber holder 10 and the rotation mechanism 20 are aligned along an axis direction that is a direction in which the axis of the optical fiber F extends. When an XYZ three-dimensional orthogonal coordinate system is set and the axis of the optical fiber F is aligned with a Z-axis, the axis direction of the optical fiber F is a Z-axis direction. The fusion splicer 1 includes a pair of the optical fiber holders 10 aligned along the Z-axis direction that is a direction in which the pair of optical fibers F extend, and a pair of the rotation mechanisms 20 aligned along the Z-axis direction. The optical fiber F to be fusion-spliced is positioned in the V-groove 11 of each of the optical fiber holders 10. As one example, the optical fiber holder 10 is made of metal. The optical fiber holder 10 holds, for example, a coated portion of the optical fiber F. The optical fiber holder 10 holds the optical fiber F in a state where a tip F1 of the optical fiber F protrudes in the Z-axis direction. The rotation mechanism 20 is disposed on the side opposite the tip F1 of the optical fiber F with respect to the optical fiber holder 10.

A pair of discharge electrodes 2 are disposed at a position where the tips F1 of the pair of optical fibers F face each other. The pair of discharge electrodes 2 are disposed at positions facing each other along a direction intersecting the optical fibers F (for example, an X-axis direction). The optical fiber holder 10 includes, for example, a base 12 in which the V-groove 11 extending along the Z-axis direction is formed and on which the optical fiber F is placed, and a lid 13 placed on the base 12. For example, the base 12 and the lid 13 are disposed to be aligned along a Y-axis direction intersecting both the X-axis direction and the Z-axis direction.

The pair of discharge electrodes 2 fusion-splice the tips F1 of the pair of optical fibers F through electric discharge. For example, the fusion splicer 1 includes a control unit 3 that controls each part of the fusion splicer 1. The control unit 3 causes fusion-splicing under fusion conditions suited to the type of the optical fibers F to be performed by controlling the discharge current and discharge time of the discharge electrodes 2. In the fusion splicer 1, the control unit 3 causes the positions of the pair of optical fibers F to be aligned.

The control unit 3 adjusts the positions of each of the optical fibers F in the X-axis direction and the Y-axis direction, and causes the axes of the pair of optical fibers F to be aligned such that the pair of optical fibers F are aligned in a straight line along the Z-axis direction. Namely, the control unit 3 causes the pair of optical fibers F to be aligned in the X-axis direction, the Y-axis direction, and the Z-axis direction. The control unit 3 causes alignment in a direction θ to be performed by controlling the rotation mechanism 20 to rotate the optical fiber F about an axis (the same as the Z-axis in the figure) extending along the center of the optical fiber F.

The optical fibers F are, for example, optical fibers that require rotational alignment in the fusion splicer 1. The optical fibers F are optical fibers in which the positions of the cores, claddings, markers, and the like of the pair of optical fibers F need to coincide with each other in the direction θ. For example, the optical fibers F are multicore optical fibers (MCFs) or polarization maintaining fibers (PMFs).

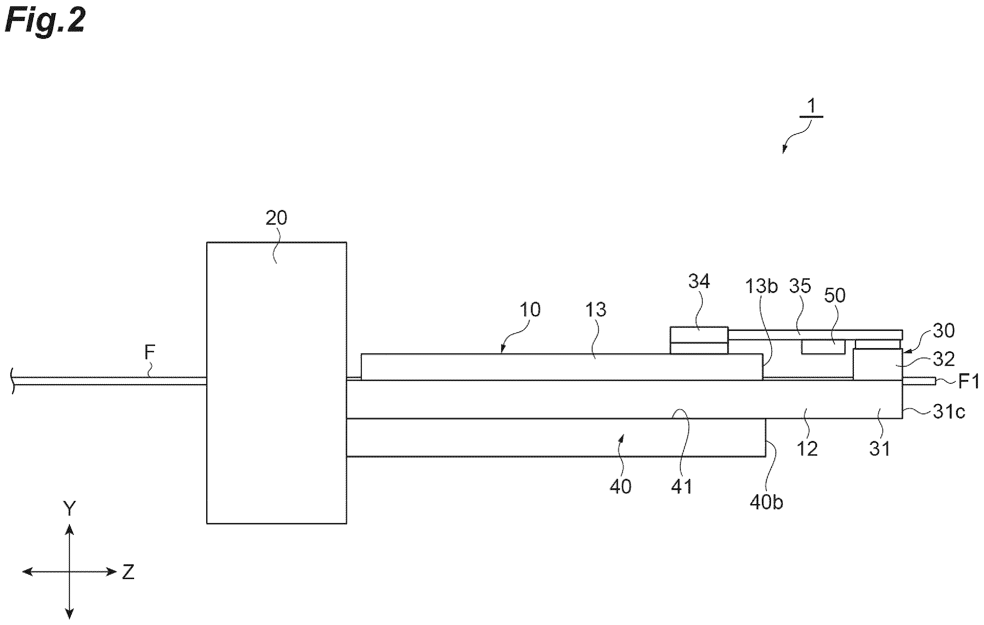

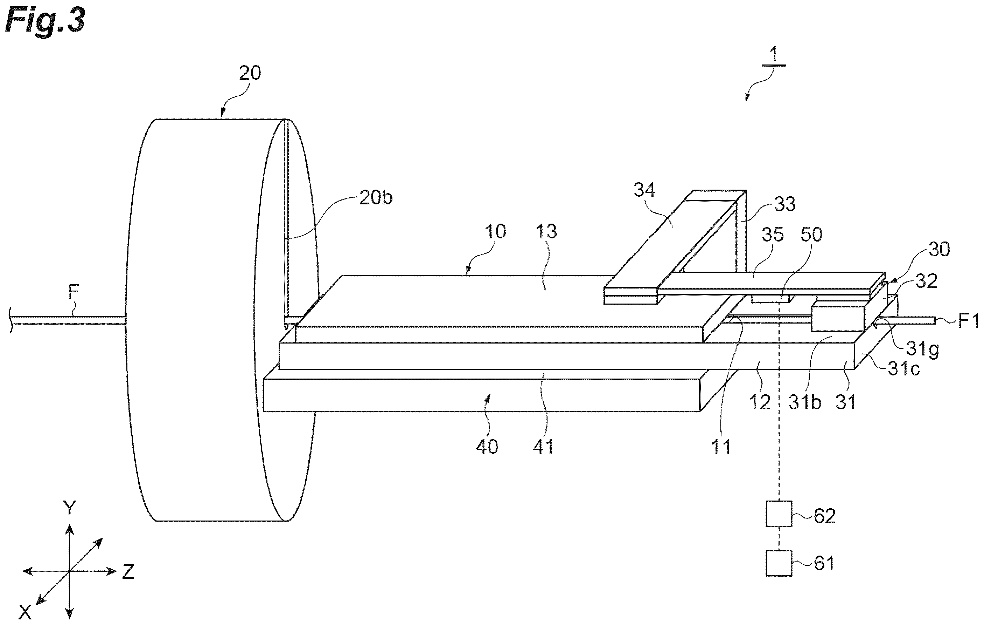

FIG. 2 is a side view showing a configuration around the optical fiber holder 10. FIG. 3 is a perspective view showing the configuration around the optical fiber holder 10. As shown in FIGS. 2 and 3, the fusion splicer 1 includes a clamp portion 30 that presses a portion of the tip F1 of the optical fiber F held by the optical fiber holder 10; a holder base 40 fixed to the rotation mechanism 20; and a light source 50. For example, the base 12 of the optical fiber holder 10 protrudes in the Z-axis direction beyond the lid 13.

A portion of the optical fiber F pressed by the clamp portion 30 is, for example, a coated portion of the optical fiber F. Only a portion of the optical fiber F protruding from the clamp portion 30 is a portion from which the coating is removed. However, the portion pressed by the clamp portion 30 may be a portion of the optical fiber F from which the coating is removed (for example, a portion of the optical fiber F in which the glass is exposed). A length of the portion of the optical fiber F protruding from the clamp portion 30 is, for example, 5 mm or less.

The holder base 40 is made of, for example, metal. The holder base 40 has a mounting surface 41 on which the optical fiber holder 10 is mounted. For example, the optical fiber holder 10 is detachable from the holder base 40. In this case, the optical fiber holder 10 detached from the holder base 40 can hold the optical fiber F, and the optical fiber holder 10 that holds the optical fiber F can be mounted on the holder base 40. Furthermore, the optical fiber holder 10 can be replaced with an optical fiber holder having the V-groove 11 suitable for the diameter (coating diameter or glass diameter) of the optical fiber F.

The holder base 40 extends from the rotation mechanism 20 in the Z-axis direction. The rotation mechanism 20 is disposed on the side opposite the tip F1 (end face) with respect to the optical fiber holder 10. The rotation mechanism 20 includes, for example, a recess 20b into which the optical fiber F is inserted. The recess 20b has a slit shape recessed from an outer peripheral surface of the rotation mechanism 20 along the Y-axis direction. The rotation mechanism 20 rotates, for example, the optical fiber F about an axis extending along the center of the optical fiber F, together with the holder base 40 and the optical fiber holder 10.

The rotation mechanism 20 includes, for example, a motor (not shown) and gears (not shown). In this case, when the motor of the rotation mechanism 20 is driven, and the rotational driving force of the motor is transmitted to the holder base 40 and the optical fiber holder 10 via the gears, the holder base 40 and the optical fiber holder 10 rotate. The optical fiber F is inserted into the recess 20b of the rotation mechanism 20, and is held by the optical fiber holders 10. Therefore, as the rotation mechanism 20 rotates the holder base 40 and the optical fiber holder 10, the clamp portion 30 and the optical fiber F rotate.

The clamp portion 30 is provided to hold the optical fiber F protruding from the optical fiber holder 10. The clamp portion 30 includes, for example, a base 31 on which the optical fiber F is placed, and a lid 32 that covers the optical fiber F placed on the base 31. The clamp portion 30 holds the optical fiber F extending from the optical fiber holder 10 in the Z-axis direction by clamping the optical fiber F between the base 31 and the lid 32.

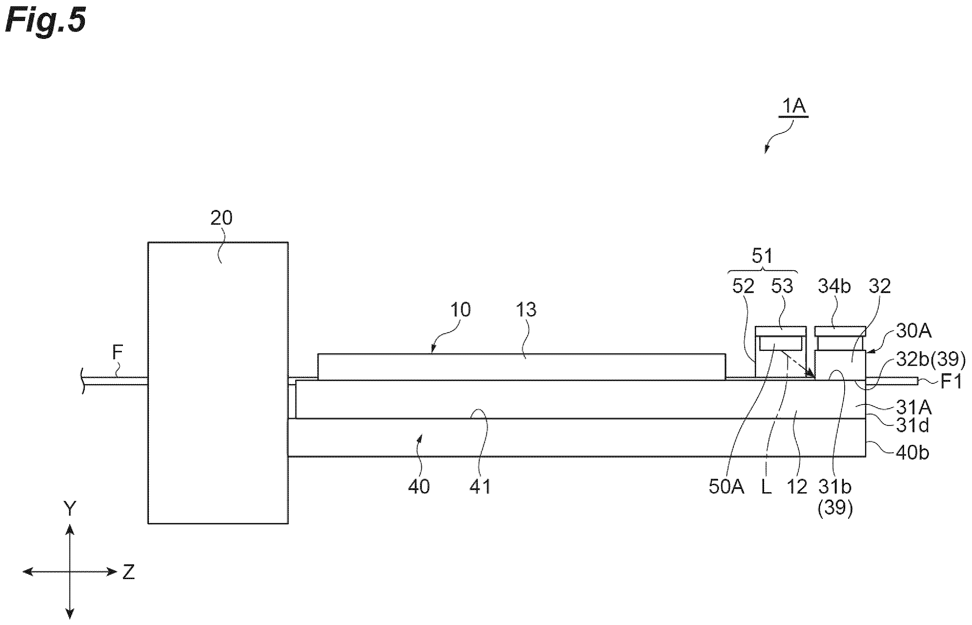

For example, the base 31 is a portion protruding from the base 12 of the optical fiber holder 10 in the Z-axis direction. An end face 31c of the base 31 located opposite the rotation mechanism 20 protrudes in the Z-axis direction beyond an end face 13b of the lid 13 located opposite the rotation mechanism 20 and an end face 40b of the holder base 40 located opposite the rotation mechanism 20. A V-groove 31g in which the optical fiber F is placed is formed in a part of an upper surface 31b of the base 31. The V-groove 31g is a groove having a V-shaped cross-section on an XY plane in FIG. 3 or 5 and extending in the Z direction. The optical fiber F placed in the V-groove 31g is clamped between an upper surface of the V-groove 31g and a lower surface 32b of the lid 32. For example, the clamp portion 30 includes a first portion 33 protruding from the holder base 40 in the Y-axis direction; a second portion 34 extending from the first portion 33 in the X-axis direction and located above the lid 13; and a third portion 35 extending from the second portion 34 in the Z-axis direction. The lid 32 protrudes downward at an end portion of the third portion 35 located on the side opposite the second portion 34. "Downward" refers to a direction in which the clamp portion presses the optical fiber, and "upward" refers to a direction opposite "downward". "Up and down" refers to upward and downward.

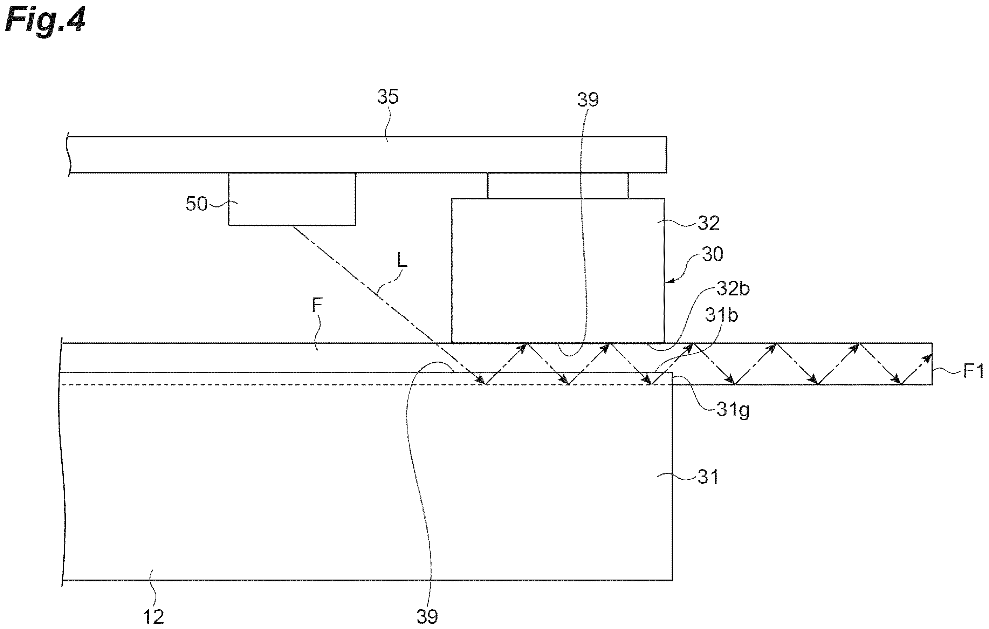

The light source 50 is disposed at a position adjacent to the base 31 and the lid 32. The light source 50 is disposed above the base 12. The light source 50 is disposed between the lid 13 of the optical fiber holder 10 and the lid 32 of the clamp portion 30. In the present embodiment, the light source 50 is fixed to a lower surface of the third portion 35. FIG. 4 is an enlarged side view of the clamp portion 30 and the light source 50. As shown in FIGS. 3 and 4, the light source 50 is disposed to allow light L to be incident on the optical fiber F from the side. The light source 50 irradiates the portion of the optical fiber F that is pressed by the clamp portion 30 with the light L. For example, the light source 50 irradiates the optical fiber F with the light L in an obliquely downward direction.

As one example, the light source 50 is an LED light source. For example, the fusion splicer 1 includes a power source 61, and the light source 50 emits light upon receiving electric power from the power source 61 via an electric power supply portion 62. The electric power supply portion 62 refers to a unit that supplies electric power to the light source 50, and refers to, for example, a portion of the fusion splicer 1 that is electrically connected to the light source 50. For example, when the fusion splicer 1 is driven by an AC power source (when the fusion splicer 1 does not include a battery or cell), the electric power supply portion 62 may be a wiring portion of the fusion splicer 1 that is connected to a power source (as one example, a household power source or a power outlet). When the fusion splicer 1 includes a battery or cell, the electric power supply portion 62 may be an internal wiring portion of the fusion splicer 1 that is connected to the battery or cell. The fusion splicer 1 may include a dedicated battery or cell to which the electric power supply portion 62 that supplies electric power to the light source 50 is connected.

The base 31 has the upper surface 31b facing the optical fiber F, and the lid 32 has the lower surface 32b facing the optical fiber F. The optical fiber F is clamped between the upper surface 31b and the lower surface 32b. Alternatively, the optical fiber F is clamped between the V-groove 31g formed on the upper surface of the base 31 and the lower surface 32b of the lid 32. At least a part of the surface of the clamp portion 30 facing the optical fiber F is a highly reflective surface 39. The highly reflective surface is a surface that is processed to increase the reflectance of incident light, or a surface to which a reflective film or the like is affixed. For example, the highly reflective surface is a surface that is mirror-finished by polishing. In addition, the highly reflective surface may be a surface to which a reflective material is affixed.

For example, the highly reflective surface 39 is a polished surface. The polished surface is a surface subjected to polishing. For example, the highly reflective surface 39 is a surface that is polished with an abrasive material. As one example, the upper surface 31b of the base 31 including the V-groove 31g and the lower surface 32b of the lid 32 are the highly reflective surfaces 39. The light L is incident on a portion of the optical fiber F from the light source 50, the portion being clamped between the base 31 and the lid 32. In this case, the light L propagates through the inside of the optical fiber F while being reflected by the V-groove 31g of the base 31 and the lower surface 32b of the lid 32. Therefore, the light L can reach the tip F1 (end face) of the optical fiber F.

An example in which the upper surface 31b of the base 31 including the V-groove 31g and the lower surface 32b of the lid 32 are the highly reflective surfaces 39 has been described above. However, a part of the V-groove 31g and a part of the lower surface 32b may be the highly reflective surfaces 39. In addition, one of the V-groove 31g and the lower surface 32b may be the highly reflective surface 39. A part of the upper surface 31b including the V-groove 31g may be the highly reflective surface 39.

Next, operational effects obtained from the fusion splicer 1 according to the present embodiment will be described. In the fusion splicer 1, the optical fiber holder 10 holds the optical fiber F, and the rotation mechanism 20 rotates the optical fiber holder 10. The fusion splicer 1 includes the clamp portion 30 that presses the optical fiber F, and the clamp portion 30 is disposed on the side opposite the rotation mechanism 20 with respect to the optical fiber holder 10. Furthermore, the fusion splicer 1 includes the light source 50 located above the optical fiber holder 10. The light source 50 irradiates a portion of the optical fiber F with the light L, the portion being pressed by the clamp portion 30, with the light L. The tip F1 of the optical fiber F protrudes from the clamp portion 30. The light source 50 located above the optical fiber holder 10 irradiates a portion of the optical fiber F with the light L, the portion being pressed by the clamp portion 30. Accordingly, the end face of the optical fiber F located at the tip F1 of the optical fiber F can be sufficiently illuminated. At least a part of the surface of the clamp portion 30 facing the optical fiber F is the highly reflective surface 39. Therefore, the light L with which the optical fiber F is irradiated from the light source 50 is reflected by the highly reflective surface 39, and is incident on the optical fiber F again. Therefore, since the light L with which the optical fiber F is irradiated from the light source 50 can be confined within the optical fiber F, the end face of the optical fiber F can be further illuminated.

As described above, the clamp portion 30 may include the base 31 on which the optical fiber F is placed, and the lid 32 that covers the optical fiber F placed on the base 31. At least a part of the upper surface 31b of the base 31 and at least a part of the lower surface 32b of the lid 32 may be the highly reflective surfaces 39. In this case, the light L can be reflected into the optical fiber F by the highly reflective surfaces 39 located above and below the optical fiber F. Therefore, since the light L can be more reliably confined within the optical fiber F, the end face located at the tip F1 of the optical fiber F can be even more illuminated.

As described above, the highly reflective surface 39 may be a polished surface. In this case, since at least a part of the surface of the clamp portion 30 facing the optical fiber F can be polished to create a polished surface, the highly reflective surface 39 can be easily formed. Incidentally, instead of the highly reflective surface 39 that is a polished surface, the highly reflective surface may be a surface formed by a reflective film affixed to a clamp.

As described above, the fusion splicer 1 may include the holder base 40 on which the optical fiber holder 10 is mounted. The optical fiber holder 10 may be detachable from the holder base 40. In this case, the fusion splicer 1 includes the holder base 40, and the optical fiber holder 10 is detachable from the holder base 40. Since the optical fiber holder 10 is attachable to and detachable from the holder base 40, the optical fiber F is easily attachable to and detachable from the rotation mechanism 20.

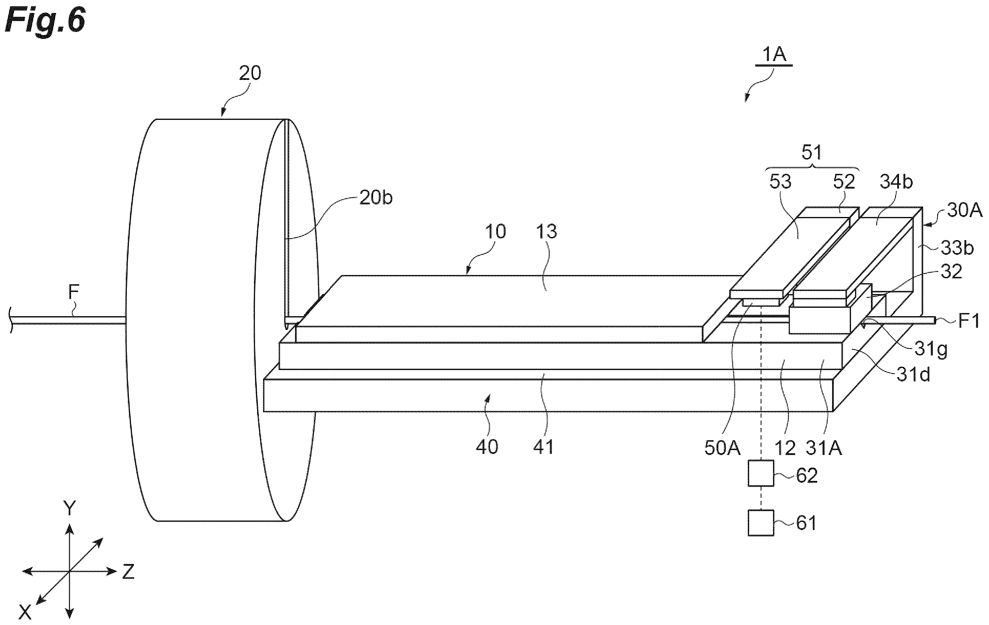

Subsequently, various modification examples of the fusion splicer according to the present disclosure will be described. Some of the configurations of fusion splicers according to the modification examples to be described later are the same as some of the configurations of the fusion splicer 1 described above. Therefore, in the following description, the same descriptions as the descriptions already given will be omitted as appropriate with the same components denoted by the same reference signs. FIG. 5 is a side view of a fusion splicer 1A according to a first modification example. FIG. 6 is a perspective view of the fusion splicer 1A.

As shown in FIGS. 5 and 6, the fusion splicer 1A includes a clamp portion 30A and a configuration around the light source 50 that are different from those of the fusion splicer 1. The clamp portion 30A includes a base 31A and the lid 32. The base 31A has an end face 31d located opposite the rotation mechanism 20. The end face 31d is a surface that is flush with the end face 40b of the holder base 40 with no step therebetween, the end face 40b being located opposite the rotation mechanism 20. The clamp portion 30A includes a first portion 33b protruding from the holder base 40 in the Y-axis direction, and a second portion 34b extending from the first portion 33 in the X-axis direction and located above the base 31A. The lid 32 protrudes downward at the second portion 34b.

A light source 50A is held by a light source holding mechanism 51. The light source holding mechanism 51 includes a third portion 52 protruding from the holder base 40 in the Y-axis direction, and a fourth portion 53 extending from the third portion 52 in the X-axis direction and located above the base 12. The light source 50A is fixed to a lower surface of the fourth portion 53. Similarly to the embodiment described above, the light source 50A irradiates a portion of the optical fiber F with the light L, the portion being pressed by the clamp portion 30A. The light L is repeatedly reflected by the highly reflective surface 39 formed in the V-groove 31g of the base 31A and by the highly reflective surface 39 formed on the lower surface 32b of the lid 32.

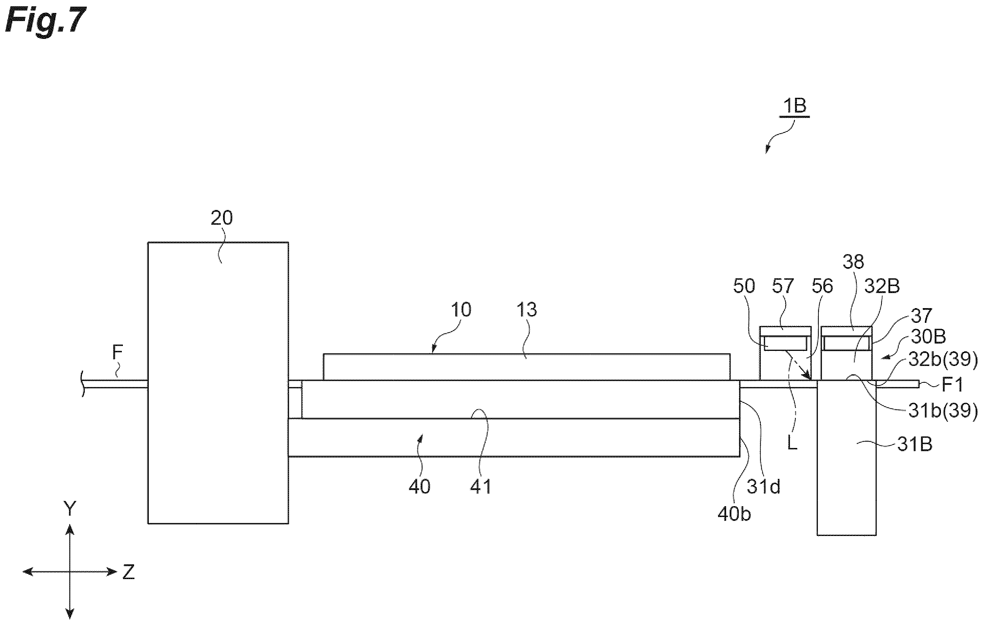

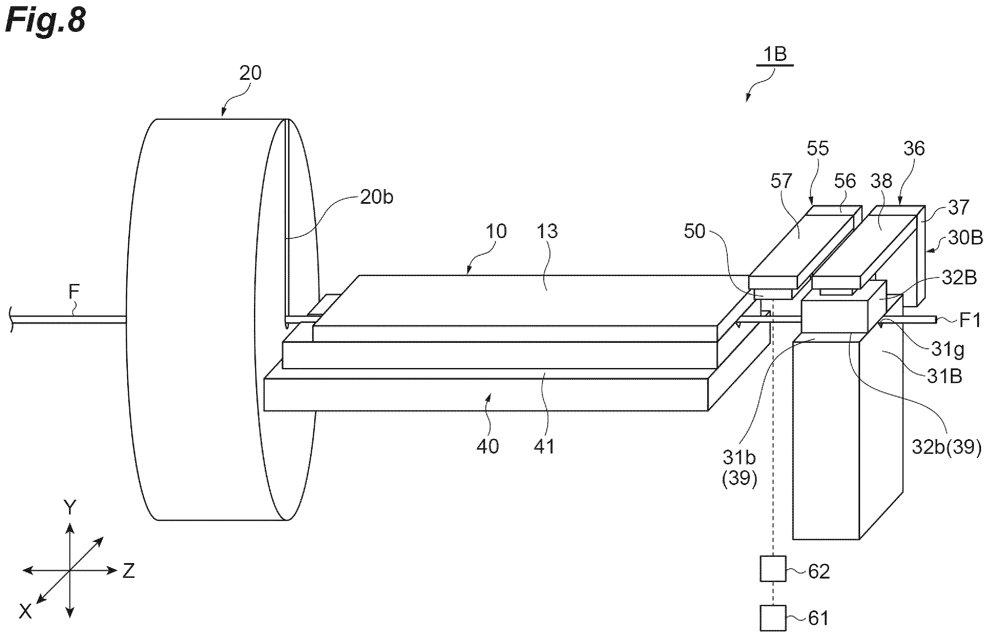

FIG. 7 is a side view of a fusion splicer 1B according to a second modification example. FIG. 8 is a perspective view of the fusion splicer 1B. As shown in FIGS. 7 and 8, the fusion splicer 1B differs from the fusion splicer 1 in that the fusion splicer 1B includes a clamp portion 30B different from the clamp portion 30 and in that the light source 50 does not rotate together with the optical fiber holder 10.

The clamp portion 30B includes a base 31B that is separate from the holder base 40, and a lid 32B that covers the optical fiber F placed on the base 31B. The lid 32B is held by a lid holding mechanism 36. The lid holding mechanism 36 includes a first portion 37 protruding in the Y-axis direction with respect to the base 31B, and a second portion 38 extending from the first portion 37 in the X-axis direction. The lid 32B is held on a lower surface of the second portion 38.

The light source 50 is held by a light source holding mechanism 55 disposed at a position adjacent to the lid holding mechanism 36. The light source 50 and the light source holding mechanism 55 are disposed between the optical fiber holder 10 and the clamp portion 30B. The light source holding mechanism 55 includes a third portion 56 extending parallel to the first portion 37, and a fourth portion 57 extending from the third portion 56 in the X-axis direction. The light source 50 is held on a lower surface of the fourth portion 57. The fusion splicer 1B includes the light source 50 that is disposed between the optical fiber holder 10 and the clamp portion 30B, and that causes the light L to be incident on a portion of the optical fiber F that is pressed by the clamp portion 30B. The light L is repeatedly reflected by the highly reflective surface 39 formed in the V-groove 31g of the base 31 and by the highly reflective surface 39 formed on the lower surface 32b of the lid 32. Therefore, the same effects as those of the fusion splicer 1 can be obtained from the fusion splicer 1B.

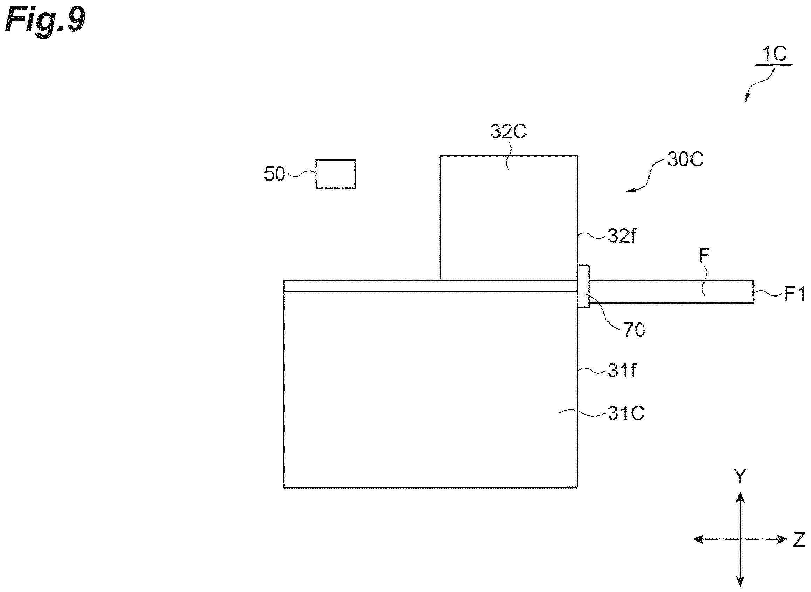

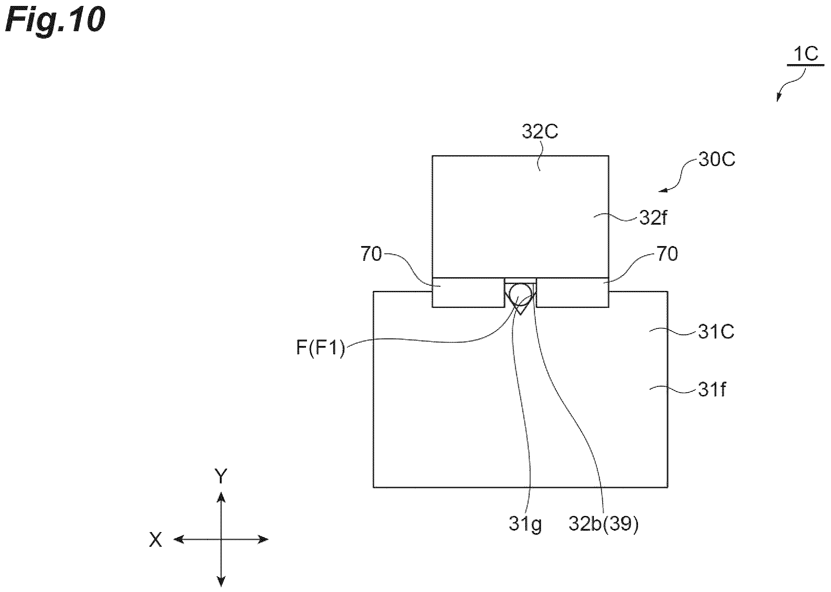

FIG. 9 is a side view showing a clamp portion 30C of a fusion splicer 1C according to a third modification example. FIG. 10 is a front view showing the clamp portion 30C. The clamp portion 30C includes a base 31C and a lid 32C. The base 31C has a first surface 31f facing away from the light source 50. The lid 32C has a second surface 32f facing away from the light source 50. The fusion splicer 1C includes a non-transparent material 70 that closes a gap formed between the lid 32C and the base 31C.

The non-transparent material 70 closes a portion of the gap formed between the lid 32C and the base 31C except for the location where the optical fiber F protrudes. The non-transparent material 70 is fixed to the second surface 32f of the lid 32C. The non-transparent material 70 extends from the second surface 32f toward the first surface 31f of the base 31C. As described above, by closing the gap, which is formed between the lid 32C and the base 31C, with the non-transparent material 70, the light can be prevented from leaking from the gap to the tip F1 of the optical fiber F. Therefore, the captured image of the end face of the tip F1 of the optical fiber F can be made clearer.

The fusion splicers according to the embodiment and various modification examples have been described above. However, the present invention is not limited to the embodiment or the modification examples described above. Namely, those skilled in the art easily recognize that various modifications and changes can be made to the present invention within the scope of the concept described in the claims. The configuration of each part of the fusion splicer can be changed as appropriate within the scope of the concept. Namely, the shape, size, number, material, and disposition mode of each part of the fusion splicer according to the present disclosure are not limited to the embodiment or the modification examples described above, and can be changed as appropriate. In addition, the fusion splicer according to the present disclosure may be a combination of a plurality of the embodiment, the first modification example, the second modification example, and the third modification example described above.

For example, in the embodiment described above, an example in which the optical fiber holder 10 is attachable to and detachable from the holder base 40 has been described. However, the optical fiber holder may not be attachable to and detachable from the holder base. In addition, the fusion splicer may not include the holder base 40. In this case, the fusion splicer may be configured such that the optical fiber holder 10 is fixed to the rotation mechanism 20.

### Reference Signs List

1, 1A, 1B, 1C: fusion splicer, 2: discharge electrode, 3: control unit, 10: optical fiber holder, 11: V-groove, 12: base, 13: lid, 13b: end face, 20: rotation mechanism, 20b: recess, 30, 30A, 30B, 30C: clamp portion, 31, 31A, 31B, 31C: base, 31b: upper surface, 31c, 31d: end face, 31f: first surface, 31g: V-groove, 32, 32B, 32C: lid, 32b: lower surface, 32f: second surface, 33, 33b: first portion, 34, 34b: second portion, 35: third portion, 36: lid holding mechanism, 37: first portion, 38: second portion, 39: highly reflective surface, 40: holder base, 40b: end face, 41: mounting surface, 50: light source, 51: light source holding mechanism, 52: third portion, 53: fourth portion, 55: light source holding mechanism, 56: third portion, 57: fourth portion, 61: power source, 62: electric power supply portion, 70: non-transparent material, F: optical fiber, F1: tip, L: light.

## Claims

1. A fusion splicer, comprising:
an optical fiber holder that holds an optical fiber;
a rotation mechanism that rotates the optical fiber holder about a central axis extending along the optical fiber;
a clamp portion that is disposed on a side opposite the rotation mechanism with respect to the optical fiber holder in a direction along the central axis, and that presses the optical fiber held by the optical fiber holder;
a light source that is disposed above the optical fiber holder, and that irradiates a portion of the optical fiber with light, the portion being pressed by the clamp portion; and
an electric power supply portion that supplies electric power to the light source,
wherein a tip of the optical fiber protrudes from the clamp portion, and
at least a part of a surface of the clamp portion facing the optical fiber is a highly reflective surface.

2. A fusion splicer, comprising:
an optical fiber holder that holds an optical fiber;
a rotation mechanism that rotates the optical fiber holder about a central axis extending along the optical fiber;
a clamp portion that is disposed on a side opposite the rotation mechanism with respect to the optical fiber holder in a direction along the central axis, and that presses the optical fiber held by the optical fiber holder;
a light source that is disposed between the optical fiber holder and the clamp portion in the direction along the central axis, and that causes light to be incident on a portion of the optical fiber that is pressed by the clamp portion; and
an electric power supply portion that supplies electric power to the light source,
wherein a tip of the optical fiber protrudes from the clamp portion, and
at least a part of a surface of the clamp portion facing the optical fiber is a highly reflective surface.

3. The fusion splicer according to claim 1 or 2,
wherein the clamp portion includes a base on which the optical fiber is placed, and a lid that covers the optical fiber placed on the base, and
at least a part of an upper surface of the base and at least a part of a lower surface of the lid are the highly reflective surfaces.

4. The fusion splicer according to claim 1 or 2,
wherein the highly reflective surface is a polished surface.

5. The fusion splicer according to claim 1 or 2,
wherein the clamp portion includes a base on which the optical fiber is placed, and a lid that covers the optical fiber placed on the base,
the base has a first surface facing away from the light source,
the lid has a second surface facing away from the light source, and
the fusion splicer further includes a non-transparent material that extends from the second surface toward the first surface, and that closes a gap formed between the lid and the base.

6. The fusion splicer according to claim 1 or 2, further comprising:
a holder base on which the optical fiber holder is mounted,
wherein the optical fiber holder is detachable from the holder base.
